# EUROPÄISCHE PATENTANMELDUNG

(11) **EP 1 190 882 A1**
(43) Veröffentlichungstag der Anmeldung: **27.03.2002**
(21) Anmeldenummer: 00120779.4
(22) Anmeldetag: 22.09.2000
(51) Int. Cl.: B60K 6/04, B60K 17/02

(54) **Antriebsvorrichtung, insbesondere für ein Kraftfahrzeug**

(71) Anmelder: SIEMENS AKTIENGESELLSCHAFT, 80333 München (DE)
(72) Erfinder: Dehrmann, Uwe, 97076 Wuerzburg (DE)

(57) **Zusammenfassung**

Zum einfachen und insbesondere axial kompakten Zusammenbau einer Antriebsvorrichtung mit einer Verbrennungsmaschine (1) und einem Starter-Generator (2) sowie einem abtriebsseitigen Automatik-Getriebe (3;4) mit vorgeschaltetem, über eine Flexplatte (5) mit der Kurbelwelle (1.1) der Verbrennungsmaschine (1) verbundenem Drehmomentwandler (3) ist der Starter-Generator (2) an der der Verbrennungsmaschine (1) abgewandten axialen Seite des Drehmomentwandlers (3) angeordnet.

## Beschreibung

Die Erfindung bezieht sich auf eine Antriebsvorrichtung gemäß Patentanspruch 1.

Ein Kraftfahrzeug, das zumindest während begrenzter Zeitabschnitte wahlweise mit rein verbrennungsmotorischem, mit rein elektromotorischem oder gleichzeitig mit verbrennungs- und elektromotorischem Antrieb betreibbar ist, ist z.B. aus der DE 43 23 601 A1 bekannt; die elektrische Maschine kann auch als Generator in Form einer elektrischen Bremse arbeiten und eine elektrisch Fahrzeugbatterie laden oder aus dieser gespeist als Starter für die Verbrennungsmaschine eingesetzt werden.

Die elektrische Maschine und die Verbrennungsmaschine arbeiten auf eine gemeinsame, im vorgenannten bekannten Fall zu einem Schaltgetriebe führende Abtriebswelle; soll anstelle eines Schaltgetriebes ein Automatik-Getriebe mit axial einem Getriebeteil vorgeschaltetem Drehmomentwandler eingesetzt werden, so ist es bei üblicher, nur durch Verbrennungsmaschinen angetriebenen Fahrzeugen bekannt, zum Ausgleich von axialen Pumpbelastungsbewegungen durch den Drehmomentwandler die Verbrennungsmaschine über ein, sich im wesentlichen radial zu deren Kurbelwelle erstreckendes, axial elastisches Verbindungselement, insbesondere eine sogenannte Flexscheibe, an die Antriebsseite des Drehmomentwandlers des Automatik-Getriebes anzukoppeln. Das Verbindungselement, insbesondere die Flexscheibe, ist dabei üblicherweise mit ihrem radial äußeren Ende, vorzugsweise über Schraubverbindungen, an den Drehmomentwandler angekoppelt.

Gemäß Aufgabe vorliegender Erfindung soll eine einfach herstell- und insbesondere montierbare, axial kurzbauende Antriebsvorrichtung der Hybrid-Art mit einer auf ein Automatik-Getriebe mit Drehmomentenwandler arbeitende Verbrennungsmaschine und einer elektrischen Maschine, insbesondere einem Starter-Generator, geschaffen werden.

Die Lösung dieser Aufgabe gelingt durch eine Antriebsvorrichtung gemäß Patentanspruch 1; vorteilhafte Augestaltungen der Erfindung sind Gegenstand der Unteransprüche.

Durch die Anordnung des Starter-Generators an der dem Verbrennungsmotor und dem elastischen Verbindungselement, insbesondere der Flexscheibe, axial abgewandten Seite, d.h. der dem Getriebeteil zugewandten Seite des Drehmomentwandlers ist einerseits der Montagezugang zur Drehmitnahme-Verbindung zwischen dem axial elastischen Verbindungselement einerseits und dem Drehmomentwandler andererseits auch bei kürzerem axialen Einbauraum hinreichend gewährleistet und kann andererseits der aufgrund der Außenmaße der Verbrennungsmaschine und des Drehmomentwandlers vorgegebene radiale Einbauraum voll von dem Starter-Generator genutzt werden, der zur Erreichung einer vorgegebenen Leistung entsprechend axial kurzbauend ausgelegt werden kann. In für eine den radialen Einbauraum voll ausnutzenden und dadurch die axiale Baulänge verkürzenden vorteilhafter Weise ist nach einer Ausgestaltung eine das Getriebeteil mit der Verbrennungsmaschine verbindende, den Drehmomentwandler übergreifende Getriebegehäuse-Glocke bzw. Wandler-Glocke unmittelbar zur Halterung des Stators einer als Innenläufermotor vorgesehenen elektrischen Maschine vorgesehen.

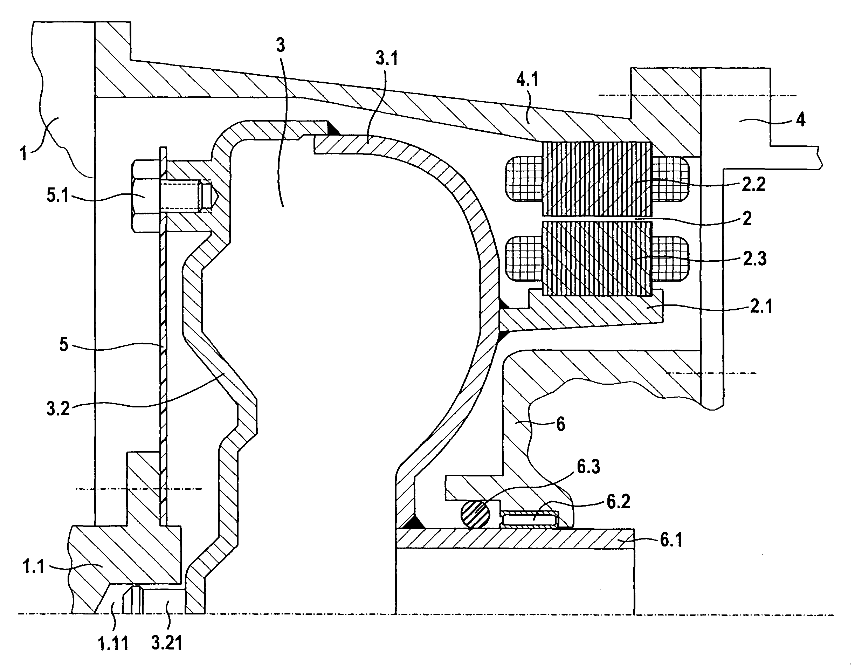

Die Erfindung sowie weitere vorteilhafte Ausgestaltungen der Erfindung gemäß Merkmalen der Unteransprüche sind im folgenden anhand eines in der Figur schematisch dargestellten Ausführungsbeispiels erläutert.

Ein in seinem inneren Aufbau an sich z.B. durch die Zeitschrift ATZ 88 (1966) 2, Seiten 81-83 oder VDI-Berichte Nr. 1175, 1995, Seiten 281, 282 bekannter Drehmomentwandler 3 ist axial zwischen einer Verbrennungsmaschine 1 einerseits und einem Starter-Generator 2 andererseits angeordnet. Die Kurbelwelle 1.1 der Verbrennungsmaschine 1 steht in Drehmitnahme mit dem radial inneren Ende eines axial elastischen Verbindungselementes 5, insbesondere einer sogenannten Flexscheibe, dass seinerseits mit seinem radial äußeren Ende über eine axial zu montierende Schraubverbindung 5.1 mit dem der Verbrennungsmaschine 1 axial benachbarten Wandlerdeckel 3.2 des Drehmomentwandlers 3 in Drehmitnahme verbunden ist; der Wandlerdeckel 3.2 ist, z.B. über eine Schweißverbindung in Drehmitnahme mit der dem Starter-Generator 2 axial benachbarten antriebsseitigen Pumpenschale 3.1 des Drehmomentwandlers 3 verbunden. An dieser antriebsseitigen Pumpenschale 3.1 ist der Rotor 2.3 mit seiner Rotorwelle in Form eines Rotorhalters 2.1 als fliegende Lagerung befestigt und somit über den Wandlerdeckel 3.2 in Drehmitnahme mit der Kurbelwelle 1.1 der Verbrennungsmaschine 1 gestellt. Der Wandlerdeckel 3.2 greift mit einem Zentrierzapfen 3.21 in eine Zentrieraufnahme 1.11 der Kurbelwelle 1.1. Radial unterhalb des Rotors 2.3 ist unter vorteilhafter Ausnutzung des zur Verfügung stehenden Einbauraumes das Pumpengehäuse 6 des Drehmomentwandlers 3 mit einem Pumpenlager 6.2 und einer Pumpendichtung 6.3 zu einer Pumpennabe 6.1 vorgesehen.

Der axial außen an der dem Drehmomentwandler 3 abgewandten Seite des Starter-Generators 2 angeordnete Getriebeteil 4 des Automatikgetriebes 3;4 ist über eine den Starter-Generator 2 und den Drehmomentwandler 3 übergreifende Getriebegehäuse-Glocke 4.1 bzw. Wandler-Glocke mit der Verbrennungsmaschine 1 verbunden. In für einen einfachen und platzsparenden Einbau vorteilhafter Weise ist die Getriebegehäuse-Glocke 4.1 bzw. Wandler-Glocke im Sinne eines unmittelbaren Halters für den Statorteil 2.2 des Starter-Generators 2 ausgebildet.

Die erfindungsgemäße Antriebsvorrichtung kann wie folgt zusammengefasst werden: Zum einfachen und insbesondere axial kompakten Zusammenbau einer Antriebsvorrichtung mit einer Verbrennungsmaschine 1 und einem Starter-Generator 2 sowie einem abtriebsseitigen Automatik-Getriebe 3;4 mit vorgeschaltetem, über eine Flexplatte 5 mit der Kurbelwelle 1.1 der Verbrennungsmaschine 1 verbundenem Drehmomentwandler 3 ist der Starter-Generator 2 an der der Verbrennungsmaschine 1 abgewandten axialen Seite des Drehmomentenwandlers 3 angeordnet.

## Patentansprüche

1. Antriebsvorrichtung, insbesondere für ein Kraftfahrzeug
- mit einer Verbrennungsmaschine (1) mit einer Abtriebswelle (1.1), vorzugsweise einer Kurbelwelle;
- mit einem mit seinem Rotor (2.3) an die Abtriebswelle (1.1) der Verbrennungsmaschine (1) koppelbaren Starter-Generator (2), insbesondere in Form einer Asynchronmaschine;
- mit einem abtriebsseitigen Automatikgetriebe (3;4) mit einem Getriebeteil (4) und einem Drehmomentwandler (3);
- mit einer Anordnung des Starter-Generators (2) an der der Verbrennungsmaschine axial abgewandten Seite des Drehmomentwandlers (3).

2. Antriebsvorrichtung nach Anspruch 1
- mit einer Drehmitnahme zwischen einem antriebsseitigen Wandlerdeckel (3.1) des Drehmomentwandlers (3) einerseits und der Abtriebswelle (1.1) der Verbrennungsmaschine (1) andererseits über ein axial elastisches Verbindungselement (5), insbesondere eine sich radial erstreckende Flexscheibe, an der der Verbrennungsmaschine (1) axial zugewandten Seite des Drehmomentwandlers (3).

3. Antriebsvorrichtung nach Anspruch 1 und/oder 2
- mit einer Drehmitnahme zwischen dem Rotor (2.3) und einer antriebsseitigen Pumpenschale (3.1) des Drehmomentwandlers (3) an dem der Drehmitnahme zwischen dem Drehmomentwandler (3) und der Verbrennungsmaschine (1) axial abgewandten Stirnseite des Drehmomentwandlers (3).

4. Antriebsanordnung nach zumindest einem der Ansprüche 1-3
- mit einer Drehmitnahme zwischen dem Drehmomentwandler (3) und dem elastischen Verbindungselement (5), insbesondere der Flexscheibe, in dessen radial äußerem Endbereich.

5. Antriebsanordnung nach zumindest einem der Ansprüche 1-4
- mit einer axialen Erstreckung des Starter-Generators (2) zwischen dem Drehmomentwandler (3) und dem Getriebeteil (4) und mit einer radialen Erstreckung des Starter-Generators (2), insbesondere seines Stators (2.2), bei einem Innenläufer-Elektromotor bis in den Bereich der Drehmitnahme zwischen dem elastischen Verbindungselement (5), insbesondere der Flexscheibe, und dem Drehmomentwandler (3).

6. Antriebsanordnung nach zumindest einem der Ansprüche 1-5
- mit einer Halterung des Getriebeteils (4) des Automatik-Getriebes (3;4) an der Verbrennungsmaschine (1) mittels einer den Starter-Generator (2) und den Drehmomentwandler (3) radial und axial übergreifenden Getriebegehäuse-Glocke (4.1).

7. Antriebsanordnung nach Anspruch 6
- mit einer Ausbildung der Getriebegehäuse-Glocke (4.1) im Sinne eines Statorhalters zur unmittelbaren Aufnahme des Stators (2.2) des Starter-Generators (2).
